# FASCICULE DE BREVET EUROPEEN

(11) **EP 1 577 975 B1**
(45) Date de publication et mention de la délivrance du brevet: **09.05.2007**
(21) Numéro de dépôt: 05290576.7
(22) Date de dépôt: 16.03.2005
(51) Int. Cl.: H01Q 1/24, H04M 1/02

(54) **Téléphone en deux parties comportant une antenne à surfaces planes rayonnantes**
Zweiteiliges Telefon mit Planar-Antenne
Telephone in two parts and comprising a planar antenna

(30) Priorité: 18.03.2004 FR 0402793
(43) Date de publication de la demande: 21.09.2005
(73) Titulaire: SAGEM Communication, 75015 Paris (FR)
(72) Inventeur: Djama, Kamel, 93700 Drancy (FR); Leray, Christian, 95800 Courdimanche (FR)
(74) Mandataire: Texier, Christian

(56) Documents cités:
- EP-A- 1 211 749
- EP-A- 1 422 787
- EP-A- 1 424 747
- FR-A- 2 802 046
- US-A- 4 992 799
- US-B1- 6 327 485

## Description

### DOMAINE TECHNIQUE GENERAL

La présente invention est relative à un téléphone en deux parties et comportant une antenne du type à surfaces rayonnantes planes.

### ETAT DE L'ART

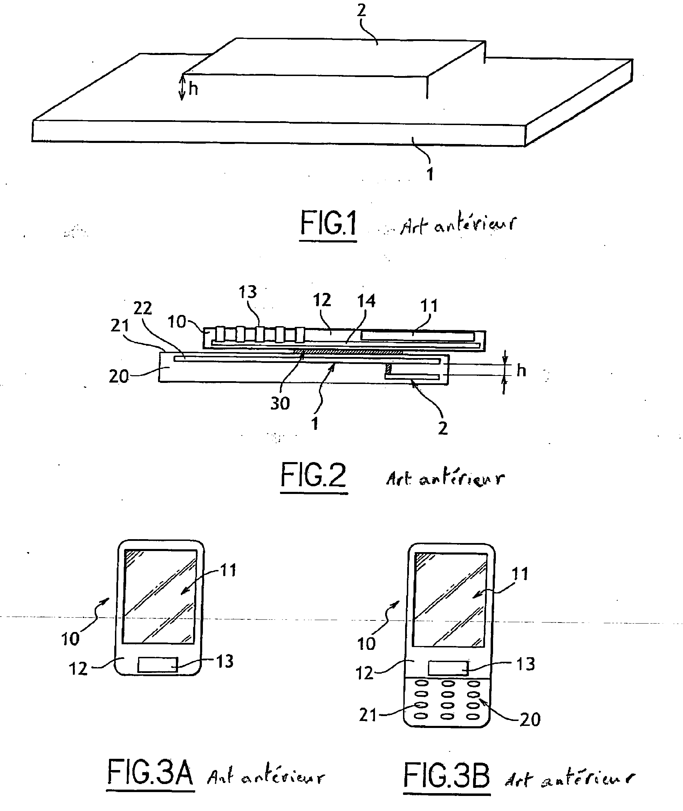

Il a déjà été proposé d'utiliser pour les téléphones portables des antennes planes appelées PIFA (« Planar Inverted-F Antenna » ou antenne plane de type F inversée) qui comportent, ainsi que l'illustre la figure 1, un plan de masse 1 et une surface conductrice plane 2 qui est superposée à ce plan de masse 1, et s'étend au droit et parallèlement à celui-ci.

Un tel montage a une longueur d'onde de résonance qui est fonction des dimensions de la surface conductrice plane 2 et de la hauteur h qui la sépare de son plan de masse 1.

Comme le montre la figure 2, une antenne de ce type est facilement intégrée dans un téléphone mobile connu comportant deux parties 10 et 20 mobiles l'une par rapport à l'autre, par exemple par translation.

La figure 2 représente ainsi une coupe longitudinale d'un téléphone connu comportant un boîtier divisé en une partie antérieure 10 et une partie postérieure 20 coopérant l'une avec l'autre grâce à des moyens 30 permettant une mobilité de la partie 10 et de la partie 20 l'une par rapport à l'autre. Les moyens 30 sont par exemple une glissière qui permet un déplacement de translation entre les parties 10 et 20.

Un élément 11 formant écran est disposé sur une coque 12 formant la partie antérieure 10 du téléphone.

Un clavier succinct 13 est monté sur la coque 12, à proximité de l'écran 11. Le clavier succinct 13 comporte par exemple une touche formant navigateur permettant à un utilisateur de se déplacer dans des menus affichés sur l'écran 11. Le clavier 13 peut également comporter des touches permettant à un utilisateur de prendre un appel en provenance d'un correspondant, et de raccrocher la ligne téléphonique. La partie antérieure 10 comporte à cet effet à l'intérieur du boîtier 12 une carte 14 de circuit imprimé permettant notamment le traitement des éléments 11 et 13.

On l'aura compris, dans la présente description, les termes « antérieur » et « postérieur » sont pris dans un sens de fonctionnement normal du téléphone, la partie antérieure 10 faisant référence à la partie comportant en général l'écran 11, ainsi qu'un haut parleur.

La partie postérieure 20 comporte quant à elle principalement le plan de masse 1 et la surface conductrice plane 2 de l'antenne du téléphone et un clavier 21. Le clavier 21 est plus complet que le clavier 13 et comporte l'ensemble des touches permettant la composition de numéros.

Comme le montrent les figures 3A et 3B, un utilisateur peut utiliser son téléphone lorsque la partie postérieure 20 est escamotée sous la partie antérieure 10. Il peut également déployer la partie postérieure 20 en effectuant une translation de cette dernière par rapport à la partie antérieure 10 pour avoir accès au clavier 21.

Dans les téléphones de l'art antérieur, le plan de masse 1 de l'antenne du téléphone est constitué par un circuit imprimé 22 situé à l'intérieur du boîtier de la partie 20, derrière les moyens 30, et relié au clavier 21.

La surface 2 rayonnante est quant à elle généralement placée à dans la partie postérieure de la partie 20, à l'arrière du boîtier du téléphone.

Toutefois, une limitation de ces téléphones tient en ce que la hauteur disponible dans la partie postérieure 20 est très faible, pour des raisons d'encombrement du téléphone.

Or, pour les antennes PIFA, la largeur de bande passante est d'autant plus restreinte et le rendement est d'autant plus faible que la hauteur h qui sépare leur surface rayonnante 2 de leur plan de masse 1 est petite, et d'une façon générale que le volume de l'antenne est petit.

Ainsi, les contraintes d'encombrement faible des téléphones de l'art antérieur empêchent de disposer d'un gain optimal sur l'ensemble des canaux utilisés sur une même bande passante.

Une solution proposée par l'art antérieur est d'augmenter l'épaisseur de la partie postérieure 20 du téléphone.

On comprend cependant que cette solution n'est pas satisfaisante, puisqu'elle augmente l'encombrement du téléphone.

Le document US 6 327 485 divulgue un terminal de téléphonie mobile comportant deux parties pliables l'une sur l'autre, chaque partie comportant un élément de l'antenne du terminal. Les configurations d'antennes dans la position fermée et dans la position ouverte du terminal sont très différentes l'une de l'autre. Ainsi dans la position ouverte, l'antenne est unipolaire, tandis que dans la position fermée l'antenne est une antenne PIFA.

FR 2 802 046 divulgue un terminal à glissière et US 4 992 799 un terminal pliable.

### PRESENTATION DE L'INVENTION

### L'invention propose de pallier ces inconvénients.

Un des buts de l'invention est de proposer un téléphone mobile comportant deux parties dont la largeur de bande passante et le rendement sont grandement améliorés par rapport aux téléphones de l'état de la technique.

Un des autres buts de l'invention est de proposer un téléphone mobile comportant deux parties dont la largeur de bande passante et le rendement sont augmentés, et ce sans augmentation de l'encombrement du téléphone.

A cet effet, l'invention propose un terminal selon la revendication 1.

L'invention est avantageusement complétée par les caractéristiques reprises dans les revendications dépendantes.

L'invention présente de nombreux avantages, notamment celui de permettre une configuration des éléments de l'antenne qui soit identique dans toutes les positions du terminal. Le fonctionnement de l'antenne est identique dans toutes les positions du terminal.

### PRESENTATION DES FIGURES

D'autres caractéristiques, buts et avantages de l'invention ressortiront de la description qui suit qui est purement illustrative et non limitative et qui doit être lue en regard des dessins annexés sur lesquels :
- la figure 1, déjà discutée, représente schématiquement une antenne de type PIFA conforme à un état de la technique connu ;
- la figure 2, également déjà discutée, représente une coupe longitudinale d'un téléphone connu comportant un boîtier divisé en deux parties;
- les figures 3A et 3B, déjà commentée, sont des représentations schématiques des mouvements possibles des parties d'un téléphone selon la figure 2 ;
- la figure 4 représente schématiquement en coupe longitudinale un mode de réalisation possible d'un terminal de téléphonie mobile selon l'invention ;
- les figures 5A et 5B, sont des représentations schématiques des mouvements possibles des parties d'un téléphone selon l'invention ;
- la figure 6 représente schématiquement en coupe longitudinale un mode de réalisation possible d'un terminal de téléphonie mobile selon l'invention comportant au moins un élément métallique supplémentaire situé dans un plan entre le plan de masse et la surface plane.
- les figures 7 et 8 montrent différents modes de réalisation d'un élément supplémentaire.

Dans l'ensemble des figures, les éléments similaires portent des références numériques identiques.

### DESCRIPTION DETAILLEE

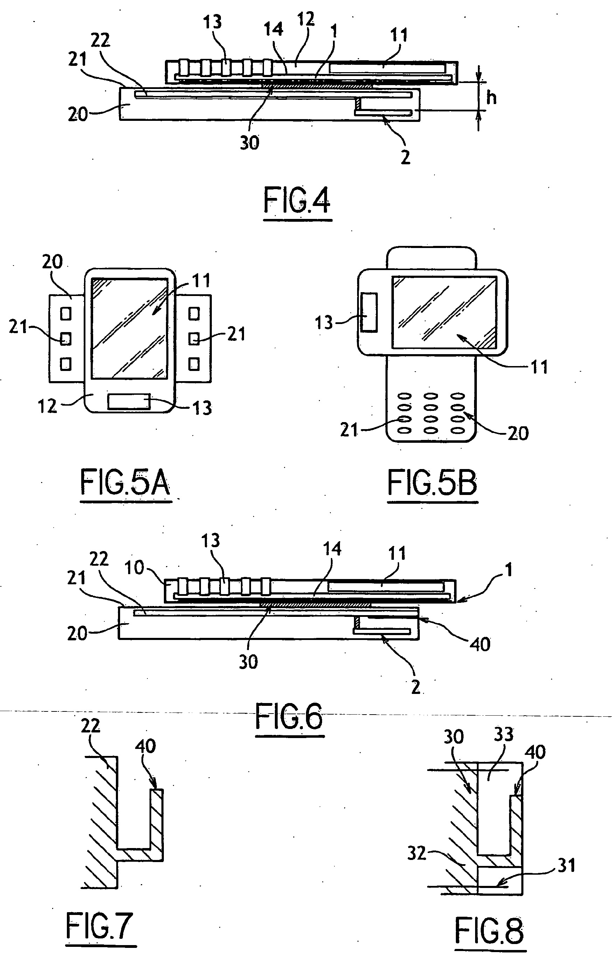

La figure 4 représente schématiquement en coupe longitudinale un mode de réalisation possible d'un terminal de téléphonie mobile selon l'invention.

Ainsi, le terminal de téléphonie mobile comporte un boîtier divisé en deux parties 10 et 20 reliées entre elles par des moyens de liaison 30.

Les moyens de liaison 30 permettent un déplacement des parties 10 et 20 les unes par rapport aux autres. Les déplacements possibles des parties les unes par rapport aux autres sont décrits plus en détails dans la suite de la présente description.

La figure 4 représente préférentiellement un terminal comportant deux parties, mais le terminal peut comporter un nombre quelconque de parties aptes à être mobiles les unes par rapport aux autres.

Préférentiellement, le terminal est divisé en une partie antérieure 10 et une partie postérieure 20

Très préférentiellement, un élément 11 formant écran est disposé sur une coque 12 formant la partie antérieure 10 du téléphone.

On rappelle que les termes « antérieur » et « postérieur » sont pris dans un sens de fonctionnement normal du téléphone, la partie antérieure 10 faisant référence à la partie comportant en général l'écran 11, ainsi qu'un haut parleur.

Un clavier succinct 13 est monté sur la coque 12, à proximité de l'écran 11. Le clavier succinct 13 comporte par exemple une touche formant navigateur permettant à un utilisateur de se déplacer dans des menus affichés sur l'écran 11.

Le clavier 13 peut également comporter des touches permettant à un utilisateur de prendre un appel en provenance d'un correspondant, et de raccrocher la ligne téléphonique. La partie antérieure 10 comporte à cet effet à l'intérieur du boîtier 12 une carte 14 de circuit imprimé permettant notamment le traitement des éléments 11 et 13.

La partie postérieure 20 comporte un clavier 21 sur une surface externe. Le clavier 21 est plus complet que le clavier 13 et comporte l'ensemble des touches permettant la composition de numéros.

Une carte de circuit imprimé 22 est reliée au clavier 21 et à des moyens de traitement permettant le fonctionnement du terminal, notamment la composition effective des numéros.

Le terminal comporte de plus une antenne d'émission/réception comportant un plan 1 de masse et au moins une surface 2 plane de rayonnement qui s'étend au droit dudit plan 1 de masse et parallèlement à celui-ci. L'antenne d'émission/réception est donc du type PIFA.

Le plan 1 de masse est situé dans une partie du boîtier, la surface plane 2 de rayonnement étant située dans une autre partie du boîtier du terminal.

L'invention permet ainsi un déploiement du plan de masse par rapport à la surface plane 2, mais surtout d'augmenter la distance h entre le plan de masse 1 et la surface plane 2.

Les performances d'un terminal selon l'invention en termes de largeur de bande passante et de rendement sont donc meilleures que ceux des terminaux de l'art antérieur, à encombrement du terminal constant. On constate en effet sur la figure 4 notamment que l'épaisseur de la partie postérieure 20 n'a pas été modifiée.

La figure 4 représente schématiquement un mode préférentiel de réalisation du terminal selon lequel le plan 1 de masse est situé à l'arrière de l'écran 11 dans la partie antérieure 10 comportant ledit écran 11.

La surface 2 plane de rayonnement est située quant à elle dans la partie 20 du boîtier opposée à la partie 10 comportant ledit écran 11, à savoir à l'arrière du boîtier du terminal.

La surface 2 plane est portée par une surface métallique à l'arrière de la partie postérieure 20, dans le boîtier, et elle est reliée de façon classique à la carte 22 de circuit imprimée. La carte 22 peut éventuellement être plus courte que les cartes de l'art antérieur, puisqu'elle n'as pas besoin d'être prolongée jusqu'au droit de la surface 2.

On comprend que plus la surface 2 est située à l'arrière du boîtier du terminal, plus la distance h est importante, et meilleures sont les performances du terminal.

Préférentiellement, le plan 1 de masse est principalement porté par la carte 14 de circuit imprimé relié au clavier 13 et à l'écran 11.

On préfère disposer le plan 1 sur la surface supérieure de la carte 14, à savoir la surface directement sous l'écran 11, afin d'augmenter au maximum la distance h entre le plan 1 et la surface plane 2.

On peut cependant, selon un autre mode de réalisation, inverser les positions du plan 1 de masse et de la surface plane 2.

Le plan 1 est alors porté par la carte 22 de circuit imprimé dans la partie 20, la surface plane 2 étant alors dans la partie 10. Ce mode de réalisation n'a cependant pas les meilleures performances d'utilisation, notamment à cause du fait que la surface 2 est cachée par l'écran 11.

On va maintenant décrire les différents modes de déplacements des parties les unes par rapport aux autres. Dans tous les déplacements des parties les unes par rapport aux autres, au moins une des parties comporte au moins un clavier apte à être découvert lors d'un déplacement relatif d'une autre partie, ledit clavier étant apte à être caché lors d'un déplacement relatif inverse des parties les unes par rapport aux autres.

Selon un premier mode de réalisation, les moyens 30 de liaison comportent des moyens 31 formant glissière. Les moyens glissières 31 sont aptes à permettre un déplacement de translation des parties 10 et 20 les unes par rapport aux autres, comme le montrent les figures 3A et 3B.

Ainsi, un utilisateur peut utiliser son téléphone lorsque la partie postérieure 20 est escamotée sous la partie antérieure 10. Le clavier 21 est caché.

Il peut également déployer la partie postérieure 20 en effectuant une translation de cette dernière par rapport à la partie antérieure 10 pour avoir accès au clavier 21.

Les moyens formant glissière 31 comportent par exemple des moyens complémentaires du type ergot/rainure.

Les moyens 31 sont préférentiellement au moins partiellement en métal, afin d'offrir une bonne résistance mécanique.

Selon un premier mode de réalisation, les moyens 30 de liaison comportent des moyens formant pivot aptes à permettant un déplacement de rotation des parties 10 et 20 les unes par rapport aux autres comme le montre la figure 5A.

Ainsi, un utilisateur peut également avoir accès au clavier 21 après la rotation de la partie postérieure 20.

Le clavier 21 comporte avantageusement des touches 21 de part et d'autre de l'écran 11, pour faciliter la navigation dans des menus s'affichant sur l'écran 11 ou pour faciliter les mouvements d'un personnage fictif dans un jeu vidéo par exemple.

Selon un mode de réalisation préférentiel, les moyens 30 comportent la glissière et le pivot, pour permettre un déplacement représenté sur la figure 5B.

Un utilisateur peut donc effectuer une translation et/ou une rotation indépendante(s) des parties 10 et 20 l'une par rapport à l'autre.

Comme l'indiquent les figures 5A et 5B, le plan de masse 1 et la surface 2 plane restent sensiblement parallèles l'une par rapport à l'autre lors de la rotation d'une des parties 10 ou 20.

Comme le montre la figure 6, selon un mode de réalisation possible, le terminal comporte avantageusement au moins un élément 40 métallique supplémentaire situé dans un plan entre le plan 1 de masse et la surface 2 plane.

Chaque élément 40 est apte à élargir la bande passante de l'antenne du terminal. En effet, en formant l'élément 40 de sorte qu'il ait une fréquence de résonance proche des fréquences d'utilisation, on élargit la bande passante globale de l'antenne. Chaque élément 40 est en contact électrique permanent avec le plan de masse 1 et la surface plane 2 de l'antenne.

Comme le montre la figure 7, un élément supplémentaire 40 peut être situé dans le plan de la carte 22 du circuit imprimé situé dans la partie 20 comportant la surface plane 2 rayonnante.

La figure 8 montre qu'un élément supplémentaire 40 peut être situé dans le plan des moyens 30 de liaison.

Dans ce cas, les moyens de liaison 30 comportent au moins une zone 32 métallique, l'élément 40 supplémentaire étant alors formé dans ladite zone 32 métallique.

De façon préférentielle, les moyens 30 de liaison comportent une zone 33 non métallique complémentaire de la zone 32 métallique apte à assurer l'étanchéité des moyens 30. Le terminal est donc protégé de l'eau et de la poussière, même lorsque le terminal est en position déployée.

La forme de l'élément 40 représentée sur les figures 7 et 8 est naturellement arbitraires et dépend des fréquences d'utilisation du terminal.

De même, on n'a décrit un terminal ne comportant qu'une seule surface rayonnante, mais le terminal peut en comporter plusieurs.

## Revendications

1. Terminal de téléphonie mobile comportant un boîtier divisé en au moins deux parties (10, 20) reliées entre elles par des moyens de liaison (30) permettant un déplacement des parties (10, 20) les unes par rapport aux autres, le terminal comportant de plus une antenne d'émission/réception comportant un plan (1) de masse situé dans une partie (10) du boîtier et au moins une surface (2) plane de rayonnement située dans une autre partie (20) du boîtier et qui s'étend au droit dudit plan (1) de masse et parallèlement à celui-ci, **caractérisé en ce que** les moyens de liaison sont aptes à permettre un déplacement pendant lequel le plan de masse (1) et la surface (2) plane restent parallèles l'un par rapport à l'autre, et **en ce qu'**il comporte au moins un élément (40) métallique supplémentaire situé dans un plan entre le plan (1) de masse et la surface (2) plane, ledit élément étant apte à élargir la bande passante de l'antenne du terminal.

2. Terminal selon la revendication 1, **caractérisé en ce qu**'il comporte un écran (11) d'affichage sur l'une (10) de ses parties, le plan (1) de masse étant situé à l'arrière de l'écran (11) dans la partie (10) comportant ledit écran (11), la surface (2) plane de rayonnement étant située dans une partie (20) du boîtier opposée à la partie (10) comportant ledit écran (11).

3. Terminal selon l'une des revendications 1 ou 2, **caractérisé en ce que** les moyens (30) de liaison comportent des moyens (31) formant glissière aptes à permettre un déplacement de translation des parties (10, 20) les unes par rapport aux autres.

4. Terminal selon l'une des revendications 1 à 3, **caractérisé en ce que** les moyens (30) de liaison comportent des moyens formant pivot aptes à permettant un déplacement de rotation des parties (10, 20) les unes par rapport aux autres, le plan de masse (1) et la surface (2) plane restant parallèles l'un par rapport à l'autre lors de ladite rotation.

5. Terminal selon l'une des revendications 3 ou 4, **caractérisé en ce qu**'une (20) des parties comporte au moins un clavier (21) apte à être découvert lors d'un déplacement relatif d'une autre (10) partie par rapport à ladite partie (20) comportant ledit clavier (21), ledit clavier (21) étant apte à être caché lors d'un déplacement relatif inverse des parties (10, 20) les unes par rapport aux autres.

6. Terminal selon la revendication 1, **caractérisé en ce qu**'un élément supplémentaire (40) est situé dans le plan d'une carte d'un circuit imprimé (22) situé dans la partie comportant la surface plane (2) rayonnante.

7. Terminal selon l'une des revendications 1 ou 6, **caractérisé en ce qu'**un élément supplémentaire (40) est situé dans le plan des moyens (30) de liaison.

8. Terminal selon la revendication 7, **caractérisé en ce que** les moyens de liaison (30) comportent au moins une zone (32) métallique, l'élément (40) supplémentaire étant alors formé dans ladite zone (32) métallique.

9. Terminal selon la revendication 8, **caractérisé en ce que** les moyens (30) de liaison comportent une zone (33) non métallique complémentaire de la zone (32) métallique apte à assurer l'étanchéité des moyens (30).

## Claims

1. Mobile telephony terminal comprising a case divided into at least two parts (10, 20) interconnected by connecting means (30) enabling a movement of the parts (10, 20) with respect to one another, the terminal further comprising a transmitting/receiving antenna having an earth plane (1) located in one part (10) of the case and at least a radiant plane surface (2) located in another part (20) of the case which extends opposite and parallel to the said earth plane (1), **characterized in that** the connecting means are capable of allowing a movement during which the earth plane (1) and the plane surface (2) remain parallel with respect to one another, and **in that** it comprises at least one additional metal element (40) located in a plane between the earth plane (1) and the surface plane (2), the said element being suitable for widening the bandwidth of the terminal's antenna.

2. Terminal according to Claim 1, **characterized in that** it comprises a display screen (11) on one (10) of its parts, the earth plane (1) being located behind the screen (11) in the part (10) including the said screen (11), the radiant plane surface (2) being located in a part (20) of the case opposite the part (10) including the said screen (11).

3. Terminal according to one of Claims 1 or 2, **characterized in that** the connecting means (30) comprise slide forming means (31) capable of allowing a translation movement of the parts (10, 20) with respect to one another.

4. Terminal according to one of Claims 1 to 3, **characterized in that** the connecting means (30) comprise pivot forming means capable of allowing a rotation movement of the parts (10, 20) with respect to one another, the earth plane (1) and the plane surface (2) remaining parallel with respect to one another during the said rotation.

5. Terminal according to one of Claims 3 or 4, **characterized in that** one (20) of the parts comprises at least a keyboard (21) capable of being uncovered during a relative movement of another (10) part with respect to the said part (20) comprising the said keyboard (21), the said keyboard (21) being capable of being hidden during a reverse relative movement of the parts (10, 20) with respect to one another.

6. Terminal according to Claim 1, **characterized in that** an additional element (40) is located in the plane of a printed circuit board (22) located in the part comprising the radiant plane surface (2).

7. Terminal according to one of Claims 1 or 6, **characterized in that** an additional element (40) is located in the plane of the connecting means (30).

8. Terminal according to Claim 7, **characterized in that** the connecting means (30) comprise at least a metal area (32), the additional element (40) then being formed in the said metal area (32).

9. Terminal according to Claim 8, **characterized in that** the connecting means (30) comprise an additional non-metallic area (32) capable of ensuring that the means are sealed (30).

## Patentansprüche

1. Mobiltelefon mit einem Gehäuse, das in wenigstens zwei Teile (10, 20) unterteilt ist, die miteinander über Verbindungseinrichtungen (30) verbunden sind, die eine Versetzung der Teile (10, 20) gegeneinander erlauben, welches Telefon weiterhin eine Sende/Empfangsantenne umfasst, die eine Körperebene (1), die sich in einem Teil (10) des Gehäuses befindet, und wenigstens eine planare Strahlungsfläche (2) umfasst, die sich im anderen Teil (20) des Gehäuses befindet und die vertikal von der besagten Körperebene (1) und parallel dazu verläuft, **dadurch gekennzeichnet, dass** die Verbindungseinrichtungen so ausgebildet sind, dass sei eine Versetzung erlauben, bei der die Körperebene (1) und die planare Fläche (2) parallel zueinander bleiben, und dass es wenigstens ein zusätzliches Metallelement (40) umfasst, das sich in einer Ebene zwischen der Körperebene (1) und der planaren Fläche (2) befindet, welches Element das Frequenzband der Antenne des Telefons vergrößern kann.

2. Telefon nach Anspruch 1, **dadurch gekennzeichnet, dass** es einen Anzeigebildschirm (11) an einem Teil (10) seiner Teile umfasst, wobei sich die Körperebene (1) an der Rückseite des Bildschirms (11) in dem Teil (10) befindet, der den besagten Bildschirm (11) umfasst, und sich die planare Strahlungsfläche (2) in einem Teil (20) des Gehäuses befindet, der dem Teil (10) gegenüberliegt, der den besagten Bildschirm (11) umfasst.

3. Telefon nach Anspruch 1 oder 2, **dadurch gekennzeichnet, dass** die Verbindungseinrichtungen (30) Einrichtungen (31) umfassen, die eine Gleitbahn bilden, die eine Translationsversetzung, der Teile (10, 20) gegeneinander ermöglichen kann.

4. Telefon nach einem der Ansprüche 1 bis 3, **dadurch gekennzeichnet, dass** die Verbindungseinrichtungen (30) Einrichtungen umfassen, die einen Drehpunkt bilden, die eine Drehversetzung der Teile (10, 20) gegeneinander ermöglichen kann, wobei die Körperebene (1) und die planare Fläche (2) während dieser Drehung parallel zueinander bleiben.

5. Telefon nach Anspruch 3 oder 4, **dadurch gekennzeichnet, dass** ein Teil (20) der Teile wenigstens eine Tastatur (21) umfasst, die während einer Versetzung relativ zu dem anderen Teil (10) bezüglich des besagten Teils (20), der die Tastatur (21) umfasst, freigelegt wird, welche Tastatur (21) während einer umgekehrten Relativversetzung der Teile (10, 20) gegeneinander verdeckt werden kann.

6. Telefon nach Anspruch 1, **dadurch gekennzeichnet, dass** sich ein zusätzliches Element (40) in der Ebene einer gedruckten Schaltungsplatte (22) befindet, die sich in dem Teil befindet, der die planare Strahlungsfläche (2) umfasst.

7. Telefon nach Anspruch 1 oder 6, **dadurch gekennzeichnet, dass** sich das zusätzliche Element (40) in der Ebene der Verbindungseinrichtungen (30) befindet.

8. Telefon nach Anspruch 7, **dadurch gekennzeichnet, dass** die Verbindungseinrichtungen (30) wenigstens einen Metallbereich (32) umfassen, wobei das zusätzliche Element (40) dann in diesem Metallbereich (32) gebildet ist.

9. Telefon nach Anspruch 8, **dadurch gekennzeichnet, dass** die Verbindungseinrichtungen (30) einen nichtmetallischen Bereich (33) umfassen, der zum Metallbereich (32) komplementär ist und die Dichtheit der Einrichtungen (30) sicherstellen kann.
